# EUROPEAN PATENT SPECIFICATION

(11) **EP 4 497 701 B1**
(45) Date of publication and mention of the grant of the patent: **15.04.2026**
(21) Application number: 23306282.7
(22) Date of filing: 25.07.2023
(51) Int. Cl.: B65D 59/08, B65D 85/20, B65D 88/12, B65D 59/00

(54) **PROTECTION ASSEMBLY TO RECEIVE ENDS OF SUBMARINE LINE SECTIONS, RELATED FLAT RACK AND METHOD**
SCHUTZANORDNUNG ZUR AUFNAHME VON ENDEN VON UNTERWASSERLEITUNGSABSCHNITTEN, ZUGEHÖRIGES FLACHES GESTELL UND VERFAHREN
ENSEMBLE DE PROTECTION POUR RECEVOIR DES EXTRÉMITÉS DE SECTIONS DE LIGNE SOUS-MARINE, BÂTI PLAT ASSOCIÉ ET PROCÉDÉ

(43) Date of publication of application: 29.01.2025
(73) Proprietor: TechnipFMC Subsea France, 92400 Courbevoie (FR)
(72) Inventor: MORAND, Henri, WEST PERTH, 6005 (AU); PRIDE, Matthew, PERTH, 6000 (AU); PANTON, Joshua, PERTH, 6000 (AU)
(74) Representative: Lavoix

(56) References cited:
- WO-A1-2014/047055
- WO-A1-2015/081373
- RU-U1- 180 934

## Description

The present invention concerns a protection assembly to receive ends of submarine line sections, the protection assembly being intended to be placed on a flat rack or to be part of a flat rack, the protection assembly comprising a horizontal base which extends out along a longitudinal axis.

The submarine line is for example a flexible line, in particular a flexible pipe, a flexible cable or a flexible umbilical. In variant, the submarine line is a rigid metallic line, such as a pipe-in-pipe (PiP), a mechanically lined pipe (MLP), or a polymer lined pipe (PLP).

The submarine line is in particular part of an offshore fluid production, fluid injection site, drilling site communication site, and/or power production site to be decommissioned.

The decommissioning of offshore sites, in particular fluid production and/or fluid injection sites after the termination of fluid production is currently a challenge for operators.

An offshore production or/and injection site generally comprises fluid collection equipment located at the bottom of a body of water. Numerous fluid injection and/or production lines extend from the fluid collection equipment to the surface, to transport fluids to be injected in the ground below the bottom of the body of water and/or to collect fluids produced from the ground.

For the decommissioning, the lines are disconnected or cut from the fluid collection equipment. The submarine lines are then lifted with a line recovery system mounted on an offshore vessel.

Thereafter, the terms "vessel", "offshore vessel" or "recovery vessel" are identical and they can be used randomly to mean that it refers to a vessel floating on a body of water and equipped with a lay system to lay submarine lines on the floor of the body of water. The lay system is also able to recover the submarine lines resting on the floor of the body of water.

The submarine lines are retrieved using vessels and are sometimes stored on the deck of the vessel, or onto reels or carousels installed on the deck of the vessel.

Alternatively, the submarine lines are cut into short sections. The submarine line sections in this case have a length ranging from 10 m to 20 m. The submarine line sections can then be processed offshore on the vessel or onshore at a deconstruction site.

The recovered submarine lines often comprise pipes which have been used to carry fluids for long periods of times. A production pipe generally conveys not only production fluids such as oil and gas, but also materials from the reservoirs in which the production fluids are extracted.

Most often, the materials comprise Naturally Occurring Radioactive Materials (NORM) and/or other materials. The radionuclides are thus transported along the production or injection lines during operation. Consequently, as time elapses, materials such as scales, deposits, sand or sludge accumulate inside or on the inner layers of the production or injection lines. These accumulated materials usually contain non-negligible levels of radionuclides.

The submarine line also contains liquids, either remains of production liquids which have been transported in the line or water which is present in the line at the end of the recovery process.

Given the potential presence of NORM within the line, precautions must be taken during the storage and transportation of the submarine line sections after they have been processed on the ship and during the ground transportation of the submarine line sections to an onshore processing site.

In particular, liquids and solids must remain confined within the submarine line sections and should not leak out.

Known methods to prevent leakage involve capping the end sections of each submarine line section.

Such an operation is tedious and expensive. An operator has to come in the vicinity of each end of each submarine line section, place a plastic cap around the end section to close it and tie or tape the plastic cap such that it remains in place.

Such a method is efficient at preventing solids and liquids leakage from the submarine line sections. However, it has many drawbacks.

In particular, access to the end sections is generally tedious on a recovery vessel, as a large number of submarine line sections are stored on the deck.

Moreover, it takes significant time for the operators not only to access each submarine line section, but also to cap each end of a submarine line section, which increases the duration of the operation.

Additionally, while capping each end of each submarine line section, the operator may be exposed to radiation or other hazardous contaminants and thus, his/her exposure to radioactive material must be carefully monitored.

Finally, the use of plastic caps at each end of each pipe section produces a lot of waste when the caps are removed at the onshore processing facility.

Known rigid pipe storage involve flat racks such as disclosed in WO 2021/118793. These racks are not adapted to safely store submarine line sections containing liquids and/or solids susceptible of leaking.

WO 2014/047055 discloses a protection assembly, which receives pipeline sections. WO2015/081373 and RU180934 disclose protection assemblies to receive timber.

One aim of the invention is thus to provide an appropriate structure to store and transport submarine line sections recovered from offshore installations, which allows a safe, cost effective and easy handling of the submarine line sections, without risk of leakage of fluids and solids out of the structure and more preferably out of the line section ends.

To this aim, the subject matter of the invention is a protection assembly according to claim 1.

The protection assembly according to the invention may comprise one or more of features of claims 2 to 8, taken solely.

The invention also concerns a flat rack according to claim 9.

The flat rack according to the invention may comprise one or more of the features of claims 10 to 13, taken solely, or according to any technical feasible combination.

The invention also concerns a method to store and transport submarine line sections according to claim 14 or 15

The invention will be better understood, based on the description which follows, given solely as an example, and made in reference to the appended drawings, in which:
- [Fig.1] Figure 1 is an upper view of a recovery vessel comprising a handling and storage stage receiving flat racks equipped with protection assemblies according to the invention;
- [Fig.2] Figure 2 is a side view of a flat rack equipped with protection assemblies according to the invention;
- [Fig.3] Figure 3 is a partial perspective view of a first protection assembly according to the invention, with the cover in its retracted submarine line section loading configuration;
- [Fig.4] Figure 4 is a side view of the loading of submarine line sections into the flat rack of figure 2;
- [Fig.5] Figure 5 is a view similar to figure 3, in which the covering is in its deployed configuration to close a storage volume above ends of the submarine line sections;
- [Fig.6] Figure 6 is a variant of a cover in another protection assembly according to the invention;
- [Fig.7] Figure 7 is a side view of the flat rack of figure 2, mounted on an onshore ground vehicle.

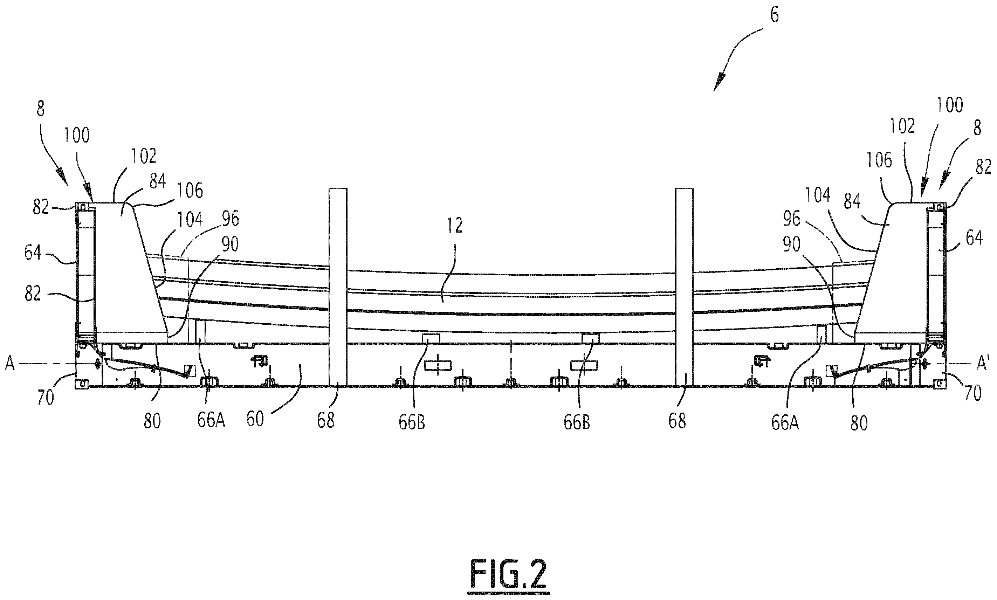

A flat rack 6, equipped with protection assemblies 8 according to the invention to receive ends of submarine line sections 12 is shown in figure 2.

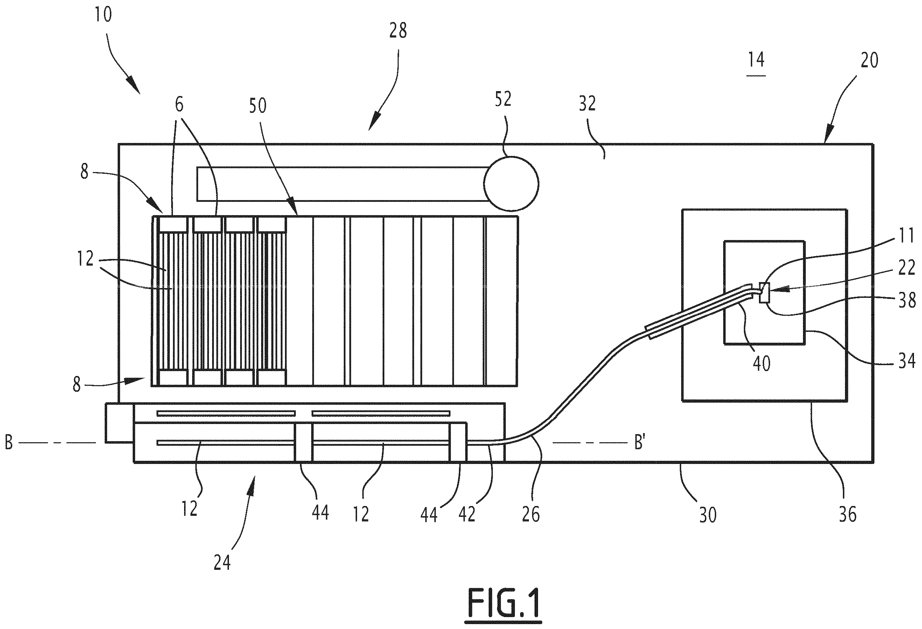

The flat rack 6 is intended to be used in an offshore recovery installation 10 depicted in figure 1, to recover a submarine line 11 and to process it in several submarine line sections 12.

The recovery installation 10 is intended to be operated over a body of water 14 to recover the submarine line 11 in the body of water 14.

The body of water 14 is for example a sea, an ocean, a lake, and/or a river, its depth is comprised generally between 10 m and 3000 m.

The submarine line sections 12 are for example sections of flexible pipe, in particular built according with the standards API 17J (Specification for Unbonded Flexible Pipe, 4th edition - May 2014) and API RP 17B (Recommended Practice for Flexible Pipe, 5th edition - May 2014) established by the American Petroleum Institute. The submarine line 11 is advantageously an unbonded flexible pipe. At least two adjacent layers of the flexible pipe are free to move longitudinally with respect to each other during flexure of the pipe.

In the example of figure 1, each submarine line section 12 has an axis and delimits a central passage for circulation of a fluid, advantageously a petroleum fluid. The central passage diameter advantageously ranges from 15 cm to 60 cm.

Alternatively, the submarine line sections 12 are sections of a Hybrid Flexible Pipe (HFP), in particular built according with the standards DNVGL-ST-F119 (Thermoplastic Composite Pipes, Edition September 2019) established by the DNV (Det Norske Veritas GL). The hybrid flexible pipe is advantageously an unbonded pipe. At least two adjacent layers of the hybrid flexible pipe are free to move longitudinally with respect to each other during flexure of the pipe.

Alternatively, the submarine line sections 12 are produced from another type of flexible pipe, such as a bonded flexible pipe, designed, manufactured and used according with the standards API RP 17B (Recommended Practice for Flexible Pipe, 5th edition - March 2014), API 7K (Drilling and Well Servicing Equipment, 6th edition - December 2015), API 16C (Choke and Kill Equipment, 3rd edition - March 2021) and API 17K (Specification for Bonded Flexible Pipe, 3rd edition - August 2017) established by the American Petroleum Institute.

Again alternatively, the submarine line sections 12 are produced from an umbilical, as defined in ISO 13628-5 "Petroleum and natural gas industries - Design and operation of subsea production systems - Part 5: Subsea umbilicals" published in December 2009 by the International Organization for Standardization, API 17E "Specification for Subsea Umbilicals", 5th Edition - July 2017, established by the American Petroleum Institute, and IEC60183:2015, January 2015, IEC60840:2020, May 2020 and/or IEC63026:2019, December 2019 , established by the International Electrotechnical Commission (IEC), all provide standards for the design and manufacture of umbilicals and power cables.

Alternatively again, the submarine line sections are produced from single rigid metallic pipe including for example mechanically lined pipe (MLP) or polymer lined pipe (PLP), or from rigid metallic pipe-in-pipe (PiP), as defined in the offshore standard DNVGL-ST-F101 "Submarine Pipeline Systems", August 2021, established by the DNV (Det Norske Veritas GL).

The submarine line sections 12 are obtained by successively transversely cutting the submarine line 11 into the submarine line sections 12.

Each submarine line section 12 has a length advantageously comprised between 10 m and 20 m. The submarine line sections 12 are transported in flat racks 6 equipped with protection assemblies 8 from their offshore recovery site to an onshore decommissioning facility where they are deconstructed and their materials recycled.

In reference to figure 1, the recovery installation 10 comprises a recovery vessel 20, a line recovery system 22 and a processing stage 24, to process an upper end region 26 of the submarine line 11 recovered with the line recovery system 22 into several submarine line sections 12. The line recovery system 22 and the processing stage 24 are here carried by the recovery vessel 20

The recovery installation 10 further comprises, downstream of the processing stage 24, a handling and storage stage 28 comprising at least a flat rack 6 equipped with protection assemblies 8 to carry and store the submarine line sections 12 processed in the processing stage 24.

In this example, the recovery vessel 20 is a ship floating on the surface of the body of water. In variant, the recovery vessel 20 is a platform, in particular a floating platform.

The recovery vessel 20 has a hull 30, floating on the surface of the body of water 14 and at least a deck 32 onto which the line recovery system 22, the processing stage 24, and the storage stage 28 are positioned.

In the example of figure 1, the hull 30 has a moon pool 34 extending vertically through the deck 32 and through the hull 30 to provide a central vertical access in the body of water 14.

Alternatively, recovery operations can take place over the side or at the back of the vessel 20.

The line recovery system 22 is configured to vertically or horizontally lift the line above the surface of the body of water 14 to bring the upper end region 26 of the submarine line 11 above the deck 32 to the processing stage 24.

Alternatively, the submarine line 11 may be lifted via a tiltable or tilted line recovery system 22 (i.e. not completely vertical and not completely horizontal) above the surface of the body of water 14. The said system being inclined over the side, at the middle or at the back of the vessel 20. Typically, said tiltable systems are actually horizontal lay systems which are slightly inclined of a few degrees, for example between 10° and 45°, in relation to the deck 32 level of the recovery vessel 20.

In the example of figure 1, which concerns in particular flexible lines, the line recovery system 22 is a vertical lift system (VLS) configured to continuously lift a vertical section of the submarine line 11 and to redirect it above the hull 30. The vertical lifting system 22 is configured to recover the submarine line 11 in a notably J shape configuration.

In a variant (not shown), the line recovery system 22 comprises another type of lifting system able to carry out a recovery in a S-lay or J-lay configuration.

In reference to figure 1, the vertical lifting system 22 comprises a tower 36 mounted on the deck 32, and tensioners 38 carried by the tower 36 to continuously lift the submarine line 11. The line recovery system 22 further advantageously comprises a redirecting mechanism 40 to bend the submarine line 11 at the top of the tower 36 and redirect it towards the deck 32.

The tower 36 is here mounted above the moon pool 34. The moon pool 34 is typically arranged through the hull 30 of the recovery vessel 20, at the middle/center. When the recovery vessel 20 does not comprise a moon pool 34, the tower 36 is advantageously mounted near a side of the hull 30 to lift the submarine line 11 from the side.

As shown in figure 1, the processing stage 24 here comprises at least a dividing system 44 positioned transversely with regards to the submarine line 11 being divided.

In the example of figure 1, each dividing system 44 is a line cutter, configured to transversely cut the submarine line 11 substantially perpendicularly to its axis.

The handling and storage stage 28 comprises a storage area 50 of the deck 32, and at least a crane 52, to carry the submarine line sections 12 to the storage area 130.

In the example of figure 1, the flat racks 6 equipped with protection assemblies 8 are positioned in the storage area 50 with an alignment transverse to the axis in which they are lay in the processing stage 24.

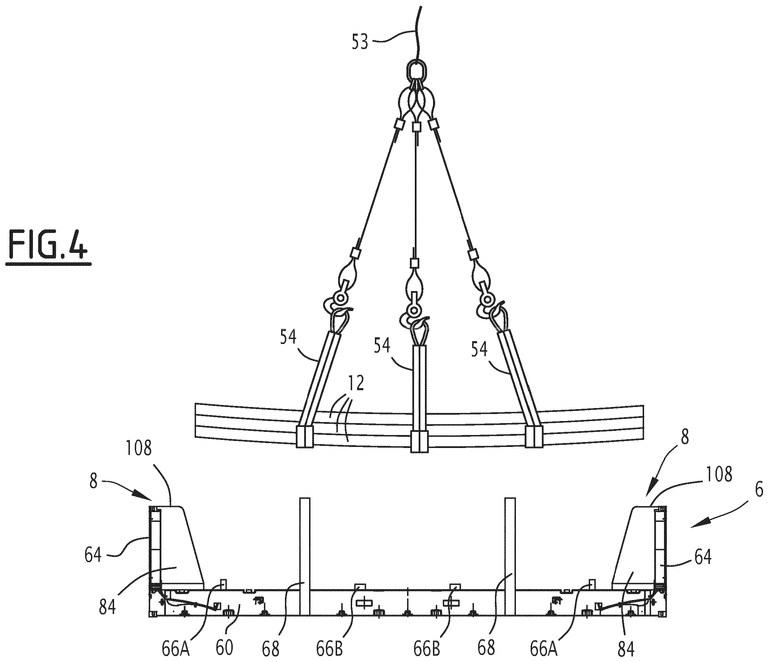

As shown in figure 4, the crane 52 is equipped with a deployable lifting crane wire 53 with at least a sling 54 mounted at its free end. The or each sling 54 is configured to be tied around several submarine line sections 12 stored in the processing stage 24 to jointly lift all the submarine line sections 12 from the processing stage 24 and lower them into the flat rack 6, as it will be described below.

As shown in figure 2, the flat rack 6 comprises a horizontal tray 60 extending along a longitudinal axis A-A', and two protection assemblies 8 positioned facing each other at the longitudinal ends of the horizontal tray 60.

In this example, the protection assemblies 8 are separate assemblies placed and potentially fixed at the ends of the horizontal tray 60. In a variant, which will be described below, at least one protection assembly 8 is an integral part of the flat rack 6 positioned at the end of the flat rack 6.

In the example of figure 2, the flat rack 6 comprises two end transverse vertical plates 64, protruding from the longitudinal ends of the horizontal tray 60. The end transverse vertical plates 64 are equipped with at least a lifting point (not shown) to allow lifting of each protection assembly 8.

Advantageously, in particular when the line sections 12 are flexible line sections, the flat rack 6 further comprises lower supporting blocks 66A, 66B to support the submarine line sections 12, extending transversely on the horizontal tray 60 between the protection assemblies 8.

The flat rack 6 advantageously comprises side stanchions 68 protruding from the sides of the horizontal tray 60 in the intermediate space defined longitudinally between the protection assemblies 8.

The horizontal tray 60 generally has a length greater than the length of the submarine line sections 12. The length of the horizontal tray 60, taken between the longitudinal edges 70 of the tray is generally comprised between 15 m and 25 m. The width of the horizontal tray 60 is smaller than its length. It is generally comprised between 5 m and 15 m.

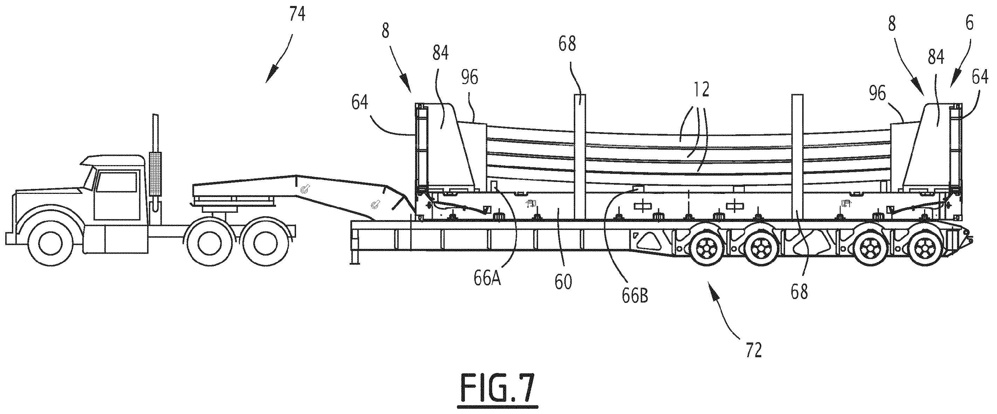

The horizontal tray 60 dimensions are preferably chosen such that it is configured to be lifted and fixed on a trailer 72 of a truck 74 shown in figure 7.

In a variant (not shown), the horizontal tray 60 may be lifted and fixed on another vehicle such as a train, or on a barge or other vessels, in place of a truck 74.

Thus, the flat rack 6 containing submarine line sections 12 can thus be easily lifted from the handling and storage area 50, to a trailer 72 onshore, to be transported towards an onshore submarine line section processing installation.

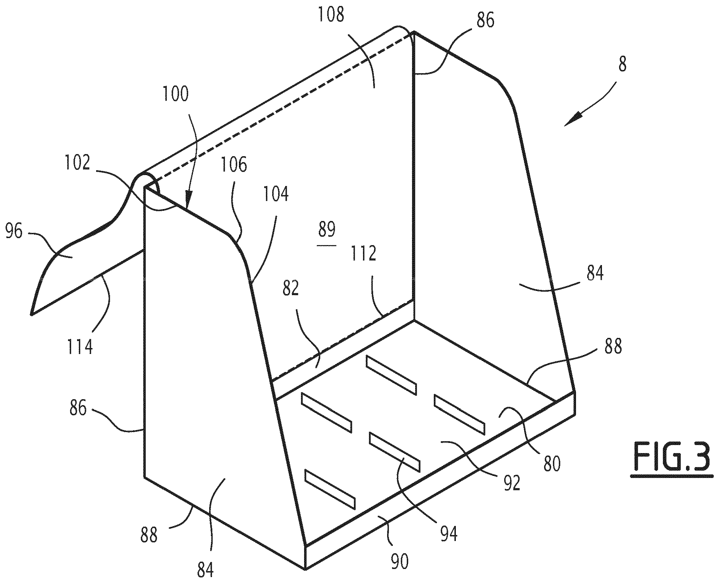

As shown on figures 2 and 3, each protection assembly 8 is fitted at a longitudinal end of the horizontal tray 60 along a transverse edge 70 of the horizontal tray 60. In this example, the protection assemblies 8 are laid on the horizontal tray 60, in contact with the transverse vertical plate 64.

As visible in figure 3, each protection assembly 8 comprises a horizontal base 80, applied on the upper surface of the horizontal tray 60, a transverse end wall 82, protruding from a transverse end edge of the horizontal base 80 and two side walls 84, each extending between a respective side edge 86 of the transverse end wall 82 to a respective lateral edge 88 of the horizontal base 80.

The transverse end wall 82 and the side walls 84 define a storage volume 89 to receive the ends of submarine line sections 12 positioned on the horizontal tray 60. The side walls 84 may also be equipped with lifting point to allow lifting of each protection assembly 8.

Each protection assembly 8 further comprises a transverse lower wall 90 connecting the free ends of the side walls 84 longitudinally apart from the transverse end wall 82. The transverse lower wall 90 defines, with the side walls 84 and the transverse end wall 82, a lower retention basin 92 to collect liquids and solids from ends of the submarine line sections 12.

Optionally, the protection assembly 8 further comprises baffles 94 protruding in the retention basin 92.

The lower retention basin 92 can be advantageously provided with an opening fitted with a tap or plug (not shown) configured to be open from a closed rest configuration to drain the content of the basin 92 at the appropriate time and location. Such an opening or a similar opening put closely can be also used as a monitoring point for detecting hazardous contaminants inside the basin 92, e.g. for sniffing hazardous gases.

Alternatively, at least one of the transverse end wall 82 and/or of the side walls 84 could be provided with an opening fitted with a tap or plug (not shown) that allows monitoring of hazardous contaminants in the storage volume 89 of the protection assembly 8, e.g. for sniffing hazardous gases.

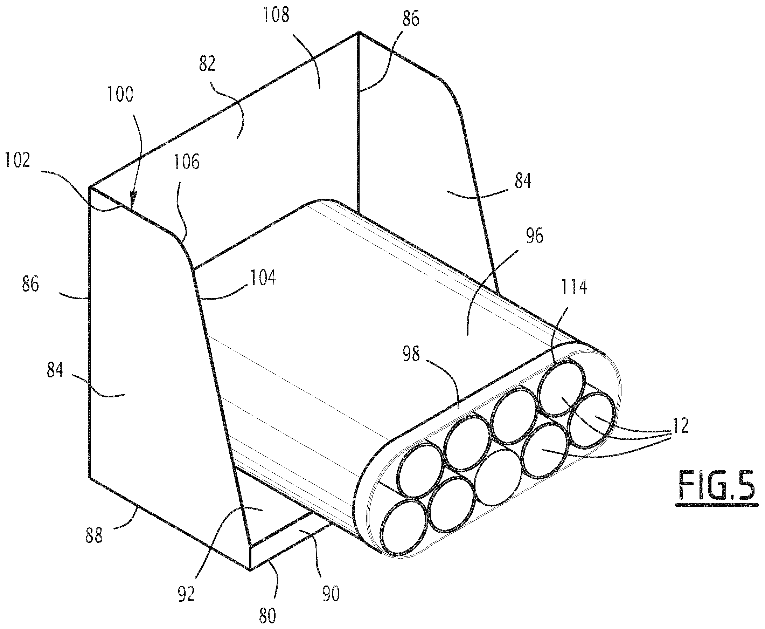

The protection assembly 8 also comprises a flexible cover 96, movable into the storage volume 89 between a retracted position (see figure 3), to allow insertion and load of the ends of the submarine line sections 12 in the storage volume 89, and a deployed configuration (see figure 5), to close the storage volume 89 above the ends of the submarine line sections 12.

The protection assembly 8 further comprises a detachable strap 98, visible in figure 5, to secure the flexible cover 96 above the ends of the submarine line sections 12.

The horizontal base 80 is for example made of a metal sheath. The width of the horizontal base 80 is substantially equal to the width of the flat rack 6, for example comprised between 90% and 100% of the width of the flat rack 6.

The length of the horizontal base 80 is smaller than half the length of the flat rack 6. The length of the horizontal base 80 is for example smaller than 30%, preferably smaller than 10% of the length of the flat rack 6.

The transverse end wall 82 protrudes at a longitudinal end of the horizontal base 80. It extends over the whole width of the horizontal base 80. Its height is preferably smaller or equal to the height of the transverse plate 64. It is comprised for example between 90% and 100% of the height of the transverse plate 64.

In this example, the transverse end wall 82 is also made of a metal sheath.

Each side wall 84 has an upper edge 100 which is at least partially inclined. In the example of figure 3, the upper edge 100 has a first horizontal region 102, connected to the transverse end wall 82 preferentially at a height equal to the height of the transverse end wall 82, and a second region 104, inclined downwardly towards a respective longitudinal end of the horizontal base 80 opposed to the transverse end wall 82. The upper edge 100 preferentially has a rounded transition region 106 between the first region 102 and the second region 104.

The storage volume 89 is thus bounded vertically by the transverse end wall 82, by each side wall 84 and downwardly by the horizontal base 80. The storage volume 89 opens upwardly in an upper insertion passage 108 through which the ends of the submarine line sections 12 can be loaded into the storage volume 89.

The storage volume 89 also opens longitudinally facing the storage volume 89 of another protection assembly 8 located at the opposite end of the horizontal tray 60.

The transverse lower wall 90 is preferentially made of a metal sheet.

The height of the transverse lower wall 90 is smaller than the height of the transverse end wall 82. The height of the transverse lower wall 90 is for example smaller than 50% of the height of the transverse end wall 82.

The transverse lower wall 90 may have a lip curved towards the transverse end wall 82 to limit sloshing during movements and handling.

In another variant, a timber dunnage is attached to the transverse lower wall 90 opposite to the retention basin 92

The retention basin 92 defines a laterally and downwardly closed retention volume to receive liquids and solids leaking from the open ends of the submarine line sections 12. It prevents such liquids and solids to drain on the horizontal tray 60 or/and away from the flat rack 6.

When present, the baffles 94 protrude in the retention basin 92. They prevent splashing of liquids contained in the retention basin 92 during handling and transportation of the flat track 6.

In a variant not shown, the retention basin 92 contains a truss received in the retention basin 92, in place of the baffles 94, or above the baffles 94.

The flexible cover 96 is for example formed of a flexible tarp. The flexible cover 96 is for example made of plastic, in particular polyethylene fabric, polyvinyl chloride (PVC), Chemical Resistant PVC, Silicone Coated Fibreglass

In the example of figure 3, the flexible cover 96 has a first edge 112, fixed to the transverse end wall 82, at a lower position on the transverse end wall 82. It has a second longitudinal edge 114 which is free to move with regard to the first edge 112.

In a variant not shown, the second longitudinal edge 114 is rolled up to the upper edge of the transverse end wall 82 and secured with a thong.

As mentioned previously, the flexible cover 96 is movable between the retracted configuration, shown in figure 3 and the deployed configuration shown in figure 5.

In the retracted configuration, the flexible cover 96 is at least retracted away from the upper insertion passage 108 to allow a vertical downward insertion of at least one end of a submarine line section into the storage volume 89.

In the particular configuration of figure 3, the flexible cover 96 is folded back above the upper edge of the transverse end wall 82. It has one base region extending vertically along an inner face of the transverse end wall 82 in the storage volume 89 and one folded region extending away from the storage volume 89 along an outer face of the transverse end wall 82. The free second edge 114 is placed away from the storage volume 89.

In the deployed configuration shown in figure 5, the flexible cover 96 is positioned over the ends of the submarine line sections 12, inside the storage volume 89. Its lateral edges are folded along the end sections of the submarine lines section 12 to horizontally cover the open ends of the submarine line sections 12.

This configuration prevents liquids and/or solids to escape above the flexible cover 96. The storage volume 89 is closed above the ends of the submarine line sections 12.

The strap 98 is detachable. It is configured to be detachably engaged around the submarine line sections 12 and above the flexible cover 96 to apply the flexible cover 96 on the ends of the submarine line sections 12, as shown in figure 5.

In reference to figure 2, at least two lower supporting blocks 66A, 66B are positioned in each half region of the horizontal tray 60. The lower supporting blocks 66A, 66B protrude above the upper surface of the horizontal tray 60.

In the example of figure 2, the two lower supporting blocks 66A, 66B protrude in each half region of a tray 60, longitudinally apart from each other, and at a longitudinal distance from the longitudinal ends of the side walls 84 opposed to the transverse end wall 82.

At least a first lower supporting block 66A closer to the end transverse wall 82 has a height which is greater than the height of a second lower block 66B located further away from the end transverse wall 82.

As shown in figure 2, this allows the submarine line sections 12, when flexible, to be supported in a U shape configuration, the U-shape opening upwardly.

When present, the stanchions 68 protrude above the horizontal tray 60, in the intermediate region between the protection assemblies 8.

In the example of figure 2, the flat rack 6 comprises at least two stanchions 68 on each side, positioned longitudinally apart from one another, and apart from the protection assemblies 8.

The height of the stanchions 68 is equal or greater to the height of the protection assemblies 8. Thus, the stanchions 68 are able to laterally retain the submarine line sections 12 when they are stored on the horizontal tray 60.

The flat rack 6 is here open upwardly above the horizontal tray 60.

The use of a flat rack 6 equipped with a protection assembly 8 according to the invention, during the recovery of a submarine line 11 will be now described.

Initially, in reference to figure 1, the submarine line 11 is recovered from the body of water 14 on the recovery vessel 20 using the line recovery system 22.

The tensioners 38 lift the submarine line 11 and transport its upper end region 26 to the processing stage 24.

In the processing stage 24, the or each dividing system 44 is activated to cut the upper end region 26 of the submarine line 11 in several submarine line sections 12. The submarine line sections 12 are temporarily retrieved in the processing stage 24.

As shown in figure 4, several submarine line sections 12 are tied with slings 54 and are seized by the deploying lifting wire 53 of the crane 52. The submarine line sections 12 are jointly lifted from the processing stage 24 and are moved to the storage area 50.

In the storage area 50, at least a flat rack 6 equipped with protection assemblies 8 is provided to receive the bundle of submarine line sections 12.

The flexible cover 96 is placed in its retracted configuration shown in figure 2, at least partially retracted away from the upper insertion passage 108. The submarine line sections 12 are then lowered by the crane 52 to be laid on the horizontal tray 60 of the flat rack 6.

The uncapped ends of the submarine line sections 12 enter downwardly in the storage volume 89 through the upper insertion passage 108.

Advantageously, the central regions of the submarine line sections 12 lay on the lower supporting blocks 66A, 66B. Given the different heights of the supporting blocks 66A, 66B, each submarine line section 1, when flexible, adopts a substantially U shape configuration with its ends raised above central region of each submarine line section 12.

Once the submarine line sections 12 are received within the storage volume 89, the flexible cover 96 is moved from the retracted configuration to the deployed configuration in the storage volume 89, to cover the ends of the submarine line sections 12.

In the example of figure 3, the second free edge 114 is pivoted about the first edge 112. The folded region of the flexible cover 96 is thus extended through the storage volume 89 to cover the ends of the submarine line sections 12 as shown in figure 5.

The strap 98 is then mounted transversally around the flexible cover 96 to maintain the flexible cover 96 applied on the ends of the submarine line sections 12.

Should some liquids and/or solids leak from an end of a submarine line section 12, it falls down in the retention basin 92. The retention basin 92 is generally drained before the flat rack 6 is lifted off the vessel 20, and ideally during transport, the retention basin 92 is empty. Nevertheless, if some liquid remains, it is held there by the baffles 94, when present, during handling and transportation of the flat rack 6.

The ends of the submarine line section 12 remain uncapped, but are fully covered by the flexible cover 96. This protects users from being exposed to the liquids and solids contained therein. The protection assembly 8 makes sure that it prevents any loss of contents which may be caused under normal conditions of transport.

Once the flat rack 6 is unloaded onshore from the recovery vessel 20, it can be placed on a surface of a ground vehicle, to be transported onshore on the ground vehicle. In the example of figure 7, the ground vehicle is a truck 74 having a trailer 72 onto which the flat rack 6 is detachably fixed.

Alternatively, the truck 74 may be replaced by another vehicle such as a train, or by a barge or other vessels.

Thanks to the provision of protection assemblies 8 on the flat rack 6, the ends of the submarine line section 12 are confined within the storage volume 89, being covered by the flexible cover 96.

Capping each end of submarine line sections 12 on the recovery vessel 20 is therefore not required. Thus, the operators do not need to access each end of the submarine line sections. They merely move the flexible cover 96 from the retracted configuration to the deployed configuration and tie the strap 98.

This allows a safe, yet very simple transportation of the submarine line sections 12 in the flat rack 6, without having to cap each end of each submarine line section 12 with a plastic cap.

The risk of liquids and/or solids leakage is avoided, in particular when the retention basin 92 is equipped with inner baffles 96 or with a truss that prevents splashing of the liquids.

The handling and transportation of the submarine line sections 12 with flat racks 6 according to the invention is therefore cheaper and simpler and does not significantly expose operators to radioactive materials. The flat racks 6 according to the invention also avoid using large quantities of plastic, limiting waste.

In a variant, not shown, the protection assembly 8 is an integral part of the flat rack structure 6.

The horizontal base 80 is formed of the upper surface of the horizontal tray 60. The transverse end wall 82 is formed by the transverse plate 64 of the flat rack 6.

The side walls 84 are permanently fixed along the vertical edges of the transverse plate 64 and along the lateral edges of the horizontal tray 60.

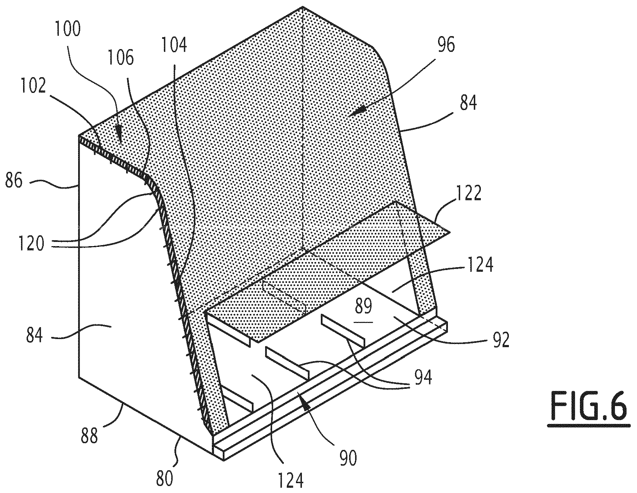

In a variant of any of the previous embodiments, shown in figure 6, the flexible cover 96 is fixed along the upper edges 100, preferably along the first and second regions 102, 104 of the side walls 84, for example by detachable attachments 120. For example, the flexible cover 96 is secured on each side wall 84 of the protection assembly 8 with fixing hooks as detachable attachments.

In a variant, the detachable attachments 120 are snap fasteners.

The flexible cover 96 comprises a flap 122 which is deployed on the submarine line sections 12 in the deployed configuration. The flap 122 defines with the transverse lower wall 90, a lower passage 124 through which the submarine line sections 12 enter the storage volume 89.

In another variant (not shown), at least a first lower supporting block 66A closer to the end transverse wall 82 has a height which is smaller than the height of a second lower block 66B located further away from the end transverse wall 82.

Given the different heights of the supporting blocks 66A, 66B, each submarine line section 12, when flexible, adopts a substantially inverted U shape configuration with its ends lowered below the central region of each submarine line section 12.

In another variant (not shown), the second supporting block 66B located further away from the transverse end wall 82 has an adjustable height that changes the curvature of flexible pipe sections 12 between concave and convex.

In another variant (not shown), adapted in particular to rigid pipe sections 12, the second supporting block 66B has height that allows rigid pipe sections 12 to sit flat between both supporting blocks 66A and 66B. The heights of blocks 66A and 66B are the same.

In another variant (not shown) of each of the previous embodiments, the protection assembly 8 comprises an upper horizontal cross member connecting the side walls 84 at the top of the storage volume 89, preferably in the vicinity of the first horizontal region 102 of the upper edges 100.

The upper horizontal cross member stiffens the structure of the protection assembly in particular between the side walls 84.

In another variant (not shown) of each of the previous embodiments, each transverse vertical plate 64 of the flat rack 6 comprise two side vertical posts which protrude axially towards the opposite transverse vertical plate 64.

The transverse end wall 82 of the protection assembly 8 correspondingly defines, along its transverse side edge 86, a profiled vertical recess of corresponding shape, which accommodates a side vertical post of the flat rack 6. Each side edge 86 of the transverse end wall 82 laterally abuts against a corresponding vertical post of the flat rack 6. The protection assembly 8 is thus transversely secured between the side vertical posts of the transverse vertical plate 64.

## Claims

1. A protection assembly (8) to receive ends of submarine line sections (12), intended to be placed on a flat rack (6) or to be part of a flat rack (6), the protection assembly (8) comprising a horizontal base (80) which extends out along a longitudinal axis (A-A');
**characterized in that** the protection assembly (8) comprises a vertically protruding transverse end wall (82) at an end of the horizontal base (80) and two vertically protruding side walls (84) extending from the transverse end wall (82) along sides of the horizontal base (80), the transverse end wall (82) and the side walls (84) delimiting a storage volume (89) to receive the ends of the submarine line section (12), the storage volume (89) emerging upwardly via an upper insertion passage (108), **characterized by** the protection assembly (8) comprising at least a flexible cover (96) movable between a retracted submarine line section loading configuration, at least partially retracted away from the upper insertion passage (108) to allow insertion in the storage volume (89) of ends of submarine line sections (12) through the upper insertion passage (108) and a deployed configuration in the storage volume (89) to cover the ends of the submarine line sections (12).

2. The protection assembly (8) according to claim 1, comprising a strap (98) to transversely maintain the cover (96) applied on ends of the submarine line sections (12) in the deployed configuration.

3. The protection assembly (8) according to any one of the preceding claims, wherein the flexible cover (96) has at least a first edge (112) fixed on the horizontal base (80), on the transverse end wall (82) or/and a side wall (84), the flexible cover (96) being foldable between the retracted configuration and the deployed configuration with regards to the first edge (112).

4. The protection assembly (8) according to any one of the preceding claims, wherein in the deployed position, the flexible cover (96) is extended in the storage volume (89).

5. The protection assembly (8) according to any one of the preceding claims, wherein the side walls (84) have an at least partially inclined upper edge (100), the upper edge (100) being inclined downwardly away from the transverse end wall (82).

6. The protection assembly (8) according to any one of the preceding claims, comprising a transverse lower wall (90), positioned apart from the transverse end wall (82), the transverse lower wall (90), the side walls (84), and the transverse end wall (82) defining a liquid retention basin (92) to collect liquids and/or solids leaking from the flexible end sections (12).

7. The protection assembly (8) according to claim 6, comprising at least a baffle (94) or/and a truss received in the retention basin.

8. The protection assembly (8) according to any one of claims 6 or 7, wherein the transverse lower wall (90) connects the side walls (84), preferably the ends of the side walls (84), a height of the transverse lower wall (90) being smaller than 50% of a height of the transverse end wall (82).

9. A flat rack (6), to receive submarine line sections (12), the flat rack (6) comprising a horizontal tray (60) extending along a longitudinal axis (A-A'), and at least one protection assembly (8) according to any one of the preceding claims, located at an end of the horizontal tray (60), preferably two protection assemblies (8) according to any one of the preceding claims, located at opposed ends of the horizontal tray (60).

10. The flat rack (6) according to claim 9, wherein the protection assembly (8) is part of the flat rack (6), the horizontal base (80) being formed by an upper surface of the horizontal tray (60), or wherein the protection assembly (8) is a separate assembly placed on the horizontal tray (60).

11. The flat rack (6) according to any one of claims 9 to 10, comprising at least a submarine line section lower supporting block (66A, 66B) in a half region of the horizontal tray (60), the lower supporting block (66A, 66B) protruding from the horizontal tray (60) at a distance from the longitudinal ends of the side walls (84) opposed to the transverse end wall (82), the lower supporting block (66A, 66B) being preferably a transverse lower block.

12. The flat rack (6) according to claim 11, comprising at least two separate lower supporting blocks (66A, 66B) in the same half region of the horizontal tray (60), a first lower supporting block (66A) closer to the transverse end wall (82) having a height greater or smaller than the height of a second lower supporting block (66B) located further away from the transverse end wall (82).

13. The flat rack (6) according to any one of claims 9 to 12, comprising at least a side retaining stanchion (68) extending upwardly from a side of the horizontal tray (60).

14. A method to store and transport submarine line sections (12) comprising :
- providing at least one flat rack (6) according to any one of claims 9 to 13, the flexible cover (96) being in its retracted configuration,
- loading submarine line sections (12) in the at least one flat rack (6),
- inserting ends of the submarine line sections (12) in the storage volume (89) of the protection assembly (8) through the upper insertion passage (108), the ends of the submarine line sections (12) being uncapped;
- moving the flexible cover (96) from the retracted configuration to the deployed configuration to cover the ends of the submarine line sections (12).

15. The method according to claim 14, wherein providing the at least one flat rack (6) is carried out on a deck of a vessel (20) having a submarine line recovery system (22) and a submarine line processing stage (24) to divide the submarine line (11) in submarine line sections (12), the method comprising loading the submarine line sections (12) in the at least one flat rack (6) from the processing stage (24), the method comprises transferring the at least one flat rack (6) onshore to an onshore vehicle such as a truck or a train or transferring the at least one flat rack (6) offshore to another vessel.

## Patentansprüche

1. Schutzanordnung (8) zum Aufnehmen von Enden von Unterwasserleitungsabschnitten (12), die dazu bestimmt sind, auf einem flachen Gestell (6) platziert zu werden oder Teil eines flachen Gestells (6) zu sein, die Schutzanordnung (8) umfassend eine horizontale Basis (80), die sich entlang einer Längsachse (A-A') erstreckt;
**dadurch gekennzeichnet, dass** die Schutzanordnung (8) eine vertikal hervorstehende transversale Endwand (82) an einem Ende der horizontalen Basis (80) und zwei vertikal hervorstehende Seitenwände (84) umfasst, die sich von der transversalen Endwand (82) entlang der Seiten der horizontalen Basis (80) erstrecken, wobei die transversale Endwand (82) und die Seitenwände (84) ein Speichervolumen (89) begrenzen, um die Enden des Unterwasserleitungsabschnitts (12) aufzunehmen, wobei das Speichervolumen (89) über einen oberen Einführungskanal (108) nach oben mündet, **dadurch gekennzeichnet, dass**
die Schutzvorrichtung (8)
mindestens eine flexible Abdeckung (96) umfasst, die zwischen einer eingezogenen Unterwasserleitungsabschnitt-Ladekonfiguration, die zumindest teilweise von dem oberen Einführungskanal (108) weggezogen ist, um das Einführen von Enden von Unterwasserleitungsabschnitten (12) durch den oberen Einführungskanal (108) in das Lagervolumen (89) zu ermöglichen, und einer entfalteten Konfiguration in dem Speichervolumen (89) zum Abdecken der Enden der Unterwasserleitungsabschnitte (12) bewegbar ist.

2. Schutzanordnung (8) nach Anspruch 1, umfassend einen Gurt (98), um die an den Enden der Unterwasserleitungsabschnitte (12) entfaltete Abdeckung (96) in der entfalteten Konfiguration quer zu halten.

3. Schutzanordnung (8) nach einem der vorherigen Ansprüche, wobei die flexible Abdeckung (96) mindestens einen ersten Rand (112) aufweist, der an der horizontalen Basis (80), an der quer verlaufenden Endwand (82) und/oder an einer Seitenwand (84) befestigt ist, wobei die flexible Abdeckung (96) um den ersten Rand (112) zwischen der eingezogenen Konfiguration und der entfalteten Konfiguration faltbar ist.

4. Schutzanordnung (8) nach einem der vorherigen Ansprüche, wobei die flexible Abdeckung (96) in der entfalteten Position in das Speichervolumen (89) ausgefahren ist.

5. Schutzanordnung (8) nach einem der vorherigen Ansprüche, wobei die Seitenwände (84) einen zumindest teilweise geneigten oberen Rand (100) aufweisen, der obere Rand (100) von der quer verlaufenden Stirnwand (82) weg nach unten geneigt ist.

6. Schutzanordnung (8) nach einem der vorherigen Ansprüche, umfassend eine quer verlaufende untere Wand (90), die von der quer verlaufenden Endwand (82) entfernt positioniert ist, wobei die quer verlaufende untere Wand (90), die Seitenwände (84) und die quer verlaufende Endwand (82) ein Flüssigkeitsrückhaltebecken (92) definieren, um Flüssigkeiten und/oder Feststoffe aufzufangen, die aus den flexiblen Endabschnitten (12) austreten.

7. Schutzvorrichtung (8) nach Anspruch 6, umfassend mindestens eine Ablenkplatte (94) und/oder einen in dem Rückhaltebecken aufgenommenen Fachwerkträger.

8. Schutzanordnung (8) nach einem der Ansprüche 6 oder 7, wobei die quer verlaufende untere Wand (90) die Seitenwände (84), vorzugsweise die Enden der Seitenwände (84), verbindet, wobei eine Höhe der quer verlaufenden unteren Wand (90) kleiner ist als 50 % einer Höhe der quer verlaufenden Endwand (82).

9. Flaches Gestell (6) zum Aufnehmen von Unterwasserleitungsabschnitten (12), das flache Gestell (6) umfassend eine sich entlang einer Längsachse (A-A') erstreckende horizontale Ablage (60) und mindestens eine Schutzanordnung (8) nach einem der vorherigen Ansprüche, die sich an einem Ende der horizontalen Ablage (60) befindet, vorzugsweise zwei Schutzanordnungen (8) nach einem der vorherigen Ansprüche, die sich an gegenüberliegenden Enden der horizontalen Ablage (60) befinden.

10. Flaches Gestell (6) nach Anspruch 9, wobei die Schutzanordnung (8) Teil des flachen Gestells (6) ist, die horizontale Basis (80) durch eine obere Fläche der horizontalen Ablage (60) gebildet ist, oder wobei die Schutzanordnung (8) eine separate Anordnung ist, die auf der horizontalen Ablage (60) angeordnet ist.

11. Flaches Gestell (6) nach einem der Ansprüche 9 bis 10, umfassend mindestens einen unteren Unterwasserleitungsabschnitt-Stützblock (66A, 66B) in einem halben Bereich der horizontalen Ablage (60), wobei der untere Stützblock (66A, 66B) von der horizontalen Wanne (60) in einem Abstand von den Längsenden der Seitenwände (84) gegenüber der quer verlaufenden Endwand (82) hervorsteht, wobei der untere Stützblock (66A, 66B) vorzugsweise ein quer verlaufender unterer Block ist.

12. Flaches Gestell (6) nach Anspruch 11, umfassend mindestens zwei separate untere Stützblöcke (66A, 66B) in dem gleichen Halbbereich der horizontalen Ablage (60), wobei ein erster unterer Stützblock (66A), der näher an der quer verlaufenden Endwand (82) ist, eine Höhe aufweist, die größer oder kleiner als die Höhe eines zweiten unteren Stützblocks (66B) aufweist, die weiter von der quer verlaufenden Endwand (82) entfernt ist.

13. Flaches Gestell (6) nach einem der Ansprüche 9 bis 12, umfassend mindestens eine seitliche Haltestütze (68), die sich von einer Seite der horizontalen Ablage (60) nach oben erstreckt.

14. Verfahren zum Speichern und Transportieren von Unterwasserleitungsabschnitten (12) umfassend:
- Bereitstellen von mindestens einem flachen Gestell (6) nach einem der Ansprüche 9 bis 13, wobei die flexible Abdeckung (96) in ihrer eingezogenen Konfiguration ist,
- Laden von Unterwasserleitungsabschnitten (12) in mindestens ein flaches Gestell (6),
- Einführen der Enden der Unterwasserleitungsabschnitte (12) in das Speichervolumen (89) der Schutzanordnung (8) durch den oberen Einführungskanal (108), wobei die Enden der Unterwasserleitungsabschnitte (12) nicht abgedeckt sind;
- Bewegen der flexiblen Abdeckung (96) aus der eingezogenen in die entfaltete Konfiguration, um die Enden der Unterwasserleitungsabschnitte (12) abzudecken.

15. Verfahren nach Anspruch 14, wobei ein Bereitstellen des mindestens einen flachen Gestells (6) auf einem Deck eines Schiffs (20) durchgeführt wird, das ein Unterwasserleitung-Bergungssystem (22) und eine Unterwasserleitung-Verarbeitungsstufe (24) aufweist, um die Unterwasserleitung (11) in Unterwasserleitungsabschnitte (12) zu unterteilen, das Verfahren umfassend ein Laden der Unterwasserleitungsabschnitte (12) in das mindestens eine flache Gestell (6) von der Verarbeitungsstufe (24), wobei das Verfahren ein Übertragen des mindestens einen flachen Gestells (6) an Land auf ein Fahrzeug an Land, wie beispielsweise einen Lastwagen oder einen Zug, oder ein Übertragen des mindestens einen flachen Gestells (6) auf See auf ein anderes Schiff umfasst.

## Revendications

1. Ensemble de protection (8) destiné à recevoir des extrémités de sections de lignes sous-marines (12) et à être placé sur un support plat (6) ou à faire partie d'un support plat (6), l'ensemble de protection (8) comprenant une base horizontale (80) qui s'étend le long d'un axe longitudinal (A-A') ;
**caractérisé en ce que** l'ensemble de protection (8) comprend une paroi d'extrémité transversale (82) faisant saillie verticalement à une extrémité de la base horizontale (80) et deux parois latérales (84) faisant saillie verticalement et s'étendant à partir de la paroi d'extrémité transversale (82) le long des côtés de la base horizontale (80), la paroi d'extrémité transversale (82) et les parois latérales (84) délimitant un volume de stockage (89) destiné à recevoir les extrémités de la section de ligne sous-marine (12), le volume de stockage (89) émergeant vers le haut par un passage d'insertion supérieur (108), **caractérisé en ce que**
l'ensemble de protection (8)
comprend au moins un couvercle flexible (96) mobile entre une configuration de chargement de section de ligne sous-marine rétractée, au moins partiellement rétractée à l'écart du passage d'insertion supérieur (108) pour permettre l'insertion dans le volume de stockage (89) d'extrémités de sections de ligne sous-marine (12) à travers le passage d'insertion supérieur (108), et une configuration déployée dans le volume de stockage (89) pour couvrir les extrémités des sections de ligne sous-marine (12).

2. Ensemble de protection (8) selon la revendication 1, comprenant une sangle (98) pour maintenir transversalement le couvercle (96) appliquée sur les extrémités des sections de ligne sous-marine (12) dans la configuration déployée.

3. Ensemble de protection (8) selon l'une quelconque des revendications précédentes, dans lequel le couvercle flexible (96) présente au moins un premier bord (112) fixé sur la base horizontale (80), sur la paroi d'extrémité transversale (82) ou/et une paroi latérale (84), le couverture flexible (96) étant pliable entre la configuration rétractée et la configuration déployée par rapport au premier bord (112).

4. Ensemble de protection (8) selon l'une quelconque des revendications précédentes, dans lequel dans le position déployée, le couvercle flexible (96) s'étend dans le volume de stockage (89).

5. Ensemble de protection (8) selon l'une quelconque des revendications précédentes, dans lequel les parois latérales (84) ont un bord supérieur (100) au moins partiellement incliné, le bord supérieur (100) étant incliné vers le bas à l'opposé de la paroi d'extrémité transversale (82).

6. Ensemble de protection (8) selon l'une quelconque des revendications précédentes, comprenant une paroi inférieure transversale (90), positionnée à l'écart de la paroi d'extrémité transversale (82), la paroi inférieure transversale (90), les parois latérales (84) et la paroi d'extrémité transversale (82) définissant un bassin de rétention de liquide (92) pour collecter les liquides et/ou les solides s'échappant des sections d'extrémité flexibles (12).

7. Ensemble de protection (8) selon la revendication 6, comprenant au moins un déflecteur (94) et/ou un treillis reçu dans le bassin de rétention.

8. Ensemble de protection (8) selon l'une quelconque des revendications 6 ou 7, dans lequel la paroi inférieure transversale (90) relie les parois latérales (84), de préférence les extrémités des parois latérales (84), une hauteur de la paroi inférieure transversale (90) étant inférieure à 50 % d'une hauteur de la paroi d'extrémité transversale (82).

9. Support plat (6) pour recevoir des sections de ligne sous-marine (12), le support plat (6) comprenant un plateau horizontal (60) s'étendant le long d'un axe longitudinal (A-A'), et au moins un ensemble de protection (8) selon l'une quelconque des revendications précédentes, situé à une extrémité du plateau horizontal (60), de préférence deux ensembles de protection (8) selon l'une quelconque des revendications précédentes, situés à des extrémités opposées du plateau horizontal (60).

10. Support plat (6) selon la revendication 9, dans lequel l'ensemble de protection (8) fait partie du support plat (6), la base horizontale (80) étant formée par une surface supérieure du plateau horizontal (60), ou dans lequel l'ensemble de protection (8) est un ensemble séparé placé sur le plateau horizontal (60).

11. Support plat (6) selon l'une quelconque des revendications 9 et 10, comprenant au moins un bloc de support inférieur (66A, 66B) de section de ligne sous-marine dans une demi-région du plateau horizontal (60), le bloc de support inférieur (66A, 66B) faisant saillie du plateau horizontal (60) à une distance des extrémités longitudinales des parois latérales (84) opposées à la paroi d'extrémité transversale (82), le bloc de support inférieur (66A, 66B) étant de préférence un bloc inférieur transversal.

12. Support plat (6) selon la revendication 11, comprenant au moins deux blocs support inférieurs (66A, 66B) séparés dans la même demi-région du plateau horizontal (60), un premier bloc de support inférieur (66A) plus proche de la paroi d'extrémité transversale (82) ayant une hauteur supérieure ou inférieure à la hauteur d'un second bloc de support inférieur (66B) situé plus loin de la paroi d'extrémité transversale (82).

13. Support plat (6) selon l'une quelconque des revendications 9 à 12, comprenant au moins un montant de retenue latéral (68) s'étendant vers le haut depuis un côté du plateau horizontal (60).

14. Procédé de stockage et de transport de sections de ligne sous-marine (12) comprenant :
- la fourniture d'au moins un support plat (6) selon l'une quelconque des revendications 9 à 13, le couvercle flexible (96) étant dans sa configuration rétractée,
- le chargement de sections de ligne sous-marine (12) dans l'au moins un support plat (6),
- l'insertion d'extrémités des sections de ligne sous-marine (12) dans le volume de stockage (89) de l'ensemble de protection (8) à travers le passage d'insertion supérieur (108), les extrémités des sections de ligne sous-marine (12) étant découvertes ;
- le déplacement du couvercle flexible (96) de la configuration rétractée à la configuration déployée pour couvrir les extrémités des sections de ligne sous-marine (12).

15. Procédé selon la revendication 14, dans lequel la fourniture de l'au moins un support plat (6) est effectuée sur le pont d'un navire (20) doté d'un système de récupération de ligne sous-marine (22) et d'une étape de traitement de lignes sous-marine (24) pour diviser la ligne sous-marine (11) en sections de ligne sous-marine (12), le procédé comprenant le chargement des sections de ligne sous-marine (12) dans l'au moins un support plat (6) de l'étape de traitement (24), le procédé comprenant le transfert de l'au moins un support plat (6) à terre dans un véhicule à terre tel qu'un camion ou un train ou le transfert de l'au moins un support plat (6) en mer sur un autre navire.
